# EUROPEAN PATENT APPLICATION

(11) **EP 4 009 142 A1**
(43) Date of publication of application: **08.06.2022**
(21) Application number: 21208466.9
(22) Date of filing: 16.11.2021
(51) Int. Cl.: G06F 3/00, G06F 3/01, G06V 40/18, G06F 21/32

(54) **APPARATUS, METHOD AND PROGRAM TO ADJUST THE PARAMETERS OF A DISPLAY**

(30) Priority: 07.12.2020 JP 2020202626
(71) Applicant: Yokogawa Electric Corporation, Tokyo 180-8750 (JP)
(72) Inventor: Akisada, Yukiyo, Musashino-shi, Tokyo (JP); Sakurai, Yasuki, Musashino-shi, Tokyo (JP)
(74) Representative: Grünecker Patent- und Rechtsanwälte PartG mbB

(57) **Abstract**

[Abstract] [Solution] There is provided an apparatus including a storage unit configured to store a display setting for each of a plurality of users, an identification unit configured to identify a current user currently facing a display screen among the plurality of users, a display control unit configured to cause the display screen to perform display by the display setting corresponding to the current user, a determination unit configured to determine presence or absence of stress of the user with respect to the display, and a change unit configured to change the display setting corresponding to the current user when it is determined that the stress is present.

## Description

### BACKGROUND

### 1. TECHNICAL FIELD

The present invention relates to an apparatus, a method, and a program.

### 2. RELATED ART

Patent document 1 describes "in a case where an occupant takes an action of squinting one's eyes or the like, a display control apparatus 4 is configured to change a display mode of a display unit 5 only when a sight line direction of the occupant faces the display unit 5".
[Patent document 1] Japanese Patent Application Publication No. 2019-197417

### GENERAL DISCLOSURE

According to a first aspect of the present invention, there is provided an apparatus. The apparatus may include a storage unit configured to store a display setting for each of a plurality of users. The apparatus may include an identification unit configured to identify a current user currently facing a display screen among the plurality of users. The apparatus may include a display control unit configured to cause the display screen to perform display by the display setting corresponding to the current user. The apparatus may include a determination unit configured to determine presence or absence of stress of the user with respect to the display. The apparatus may include a change unit configured to change the display setting corresponding to the current user when it is determined that the stress is present.

The storage unit may further store visual sensation data related to a visual sensation function with respect to the display screen for each of the users. The change unit may change the display setting in accordance with the visual sensation data of the current user.

The visual sensation data may indicate at least one of an age or an eyesight of the user.

The visual sensation data may indicate a location of a seat allocated to the user among a plurality of seats.

The change unit may change a size of a letter to be displayed.

The change unit may change a luminance of the display scree.

The apparatus may further include an image capturing unit configured to capture eyes of the user. The identification unit may identify the current user using an iris pattern of the eyes captured by the image capturing unit.

The apparatus may further include an input unit configured to receive an input of authentication information from the user. The identification unit is configured to identify the current user based on the authentication information.

The apparatus may further include an image capturing unit configured to capture eyes of the user. The determination unit is configured to determine presence or absence of stress based on a state of the eyes captured by the image capturing unit.

The determination unit may determine that the stress is present in response to a state where the captured eyes are squinched to be thinner than a reference width.

According to a second aspect of the present invention, there is provided a method. The method may include storing a display setting for each of a plurality of users. The method may include identifying a current user currently facing a display screen among the plurality of users. The method may include causing the display screen to perform display by the display setting corresponding to the current user. The method may include determining presence or absence of stress of the user with respect to the display. The method may include changing the display setting corresponding to the current user when it is determined that the stress is present.

According to a third aspect of the present invention, there is provided a program. The program may cause a computer to function as a storage unit configured to store a display setting for each of a plurality of users. The program may cause the computer to function as an identification unit configured to identify a current user currently facing a display screen among the plurality of users. The program may cause the computer to function as a display control unit configured to cause the display screen to perform display by the display setting corresponding to the current user. The program may cause the computer to function as a determination unit configured to determine presence or absence of stress of the user with respect to the display. The program may cause the computer to function as a change unit configured to change the display setting corresponding to the current user when it is determined that the stress is present.

The summary clause does not necessarily describe all necessary features of the embodiments of the present invention. The present invention may also be a sub-combination of the features described above.

### BRIEF DESCRIPTION OF THE DRAWINGS

Fig. 1 illustrates a maintenance and management system 1 according to the present embodiment.
Fig. 2 illustrates an interface apparatus 16.
Fig. 3 illustrates an operation of the interface apparatus 16.
Fig. 4 illustrates an example of a computer 2200 in which a plurality of aspects of the present invention may be entirely or partially embodied.

### DESCRIPTION OF EXEMPLARY EMBODIMENTS

Hereinafter, the present invention will be described by way of embodiments of the invention, but the following embodiments are not intended to limit the invention according to the claims. In addition, not all combinations of features described in the embodiments necessarily have to be essential to solving means of the invention.

### [1. Configuration of maintenance and management system 1]

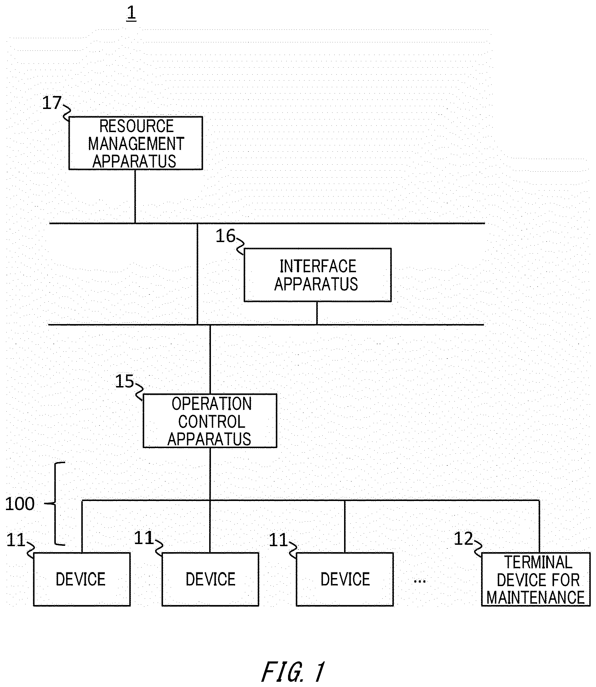

Fig. 1 illustrates a maintenance and management system 1 according to the present embodiment. The maintenance and management system 1 is configured to conduct maintenance and management of a plant and includes a plurality of devices 11, a terminal device 12 for maintenance, an operation control apparatus 15, an interface apparatus 16, and a resource management apparatus 17.

Herein, the plant includes not only an industrial plant such as a chemical plant but also a plant that manages and controls a well source such as a gas field or an oil field and its surrounding area, a plant that manages and controls power generation such as hydroelectric, thermal, or nuclear power generation, a plant that manages and controls environmental power generation such as solar or wind power generation, a plant that manages and controls water and sewerage or a dam, and the like. Each of the devices 11 and the terminal device 12 for maintenance may be arranged in a site where a process is to be executed in the plant. For example, a pipe through which a fluid to be measured flows, a flowmeter arranged in the pipe and configured to measure a mass flow rate of the fluid, and the like are present in the site. The operation control apparatus 15, the interface apparatus 16, and the resource management apparatus 17 may be arranged in a management center of the plant.

### [1-1. Device 11]

The plurality of devices 11 is equipment, machinery, or an apparatus, and may be, for example, a sensor configured to measure a physical quantity such as a pressure, a temperature, a pH, a speed, or a mass flow rate in the process of the plant, may be an actuator such as a valve, a mass flow rate control valve, an on-off valve, a pump, a fan, a motor, a heating apparatus, or a cooling apparatus configured to control any of physical quantities, may be an audio device such as a microphone or a speaker configured to collect an abnormal sound or the like in the plant or emit a warning sound or the like, may be a location detection device configured to output location information of each device, may be a pipe through which a fluid flows, or may be other devices. The respective devices 11 in the plurality of devices 11 may be mutually different types, or at least a part of two or more of the devices 11 may be the same type.

Each of the devices 11 may be connected to the operation control apparatus 15 in a wired or wireless manner via a control network 100. A communication in the control network 100 may be a digital communication or may be a hybrid communication in which a digital signal is superimposed on an analog signal (signal at 4 to 20 mA or the like), and a speed may be approximately from 1000 bps to 10000 bps (as one example, 1200 bps, or 2400 bps). The communication in the control network 100 may be performed, for example, by a wireless communication protocol of International Society of Automation (ISA), and as one example, the communication may be performed by ISA100, Highway Addressable Remote Transducer (HART) (registered trademark), BRAIN (registered trademark), FOUNDATION Fieldbus, PROFIBUS, or the like.

Each of the devices 11 may include unique identification information (also referred to as device dependent information). The device dependent information is information for uniquely identifying the device, and may be, according to the present embodiment, as one example, at least one of a serial number assigned to the device 11 by a communication protocol (as one example, HART), a serial number set by a manufacturer of the device 11, or a device ID.

### [1-2. Terminal device 12 for maintenance]

The terminal device 12 for maintenance is configured to access a set parameter of the device 11 and refer to, set, and change a value of the set parameter, or the like. The terminal device 12 for maintenance may be a handheld terminal (HHT) held by a site worker (as one example, a smartphone or a tablet PC), or a stationary type PC. When the terminal device 12 for maintenance is a handheld terminal, the terminal device 12 for maintenance may be detachably connected to the device 11.

### [1-3. Operation control apparatus 15]

The operation control apparatus 15 is configured to communicate with each of the devices 11 and control the process. For example, the operation control apparatus 15 is configured to acquire a process value corresponding to measurement data from the device 11 serving as a sensor, and drive the device 11 serving as an actuator. Then, the operation control apparatus 15 may supply the process value to the interface apparatus 16, and receive a target value of the process value from the interface apparatus 16. Note that according to the present embodiment, as one example, descriptions have been provided where the maintenance and management system 1 includes the single operation control apparatus 15 to control all the devices 11, but the maintenance and management system 1 may include a plurality of the operation control apparatuses 15 which are configured to respectively control parts of the devices 11 in a distributed manner. As one example, the operation control apparatus 15 may be a field control station (FCS).

### [1-4. Interface apparatus 16]

The interface apparatus 16 is one example of an apparatus, and is configured to display various types of data in the plant on a display screen and provides an interface between an administrator and the plant. The interface apparatus 16 may control the process of the plant via the operation control apparatus 15 in response to an operation by the administrator. For example, the interface apparatus 16 may receive the process value from the operation control apparatus 15, and supply the target value of the process value to the operation control apparatus 15. In addition, the interface apparatus 16 may change the value of the set parameter of the device 11 via the operation control apparatus 15. In addition, the interface apparatus 16 may store the value of the set parameter of the device 11 in association with at least a part of the devices 11. The interface apparatus 16 may be a human interface station (HIS) as one example, and may be configured by a PC or the like.

### [1-5. Resource management apparatus 17]

The resource management apparatus 17 is configured to perform online monitoring and centralized control of the plant. For example, the resource management apparatus 17 may manage information (as one example, the value of the set parameter or the process value) of the device 11 or the like which is acquired by the operation control apparatus 15. The resource management apparatus 17 may be configured by a PC or the like as one example.

### [2. Interface apparatus 16]

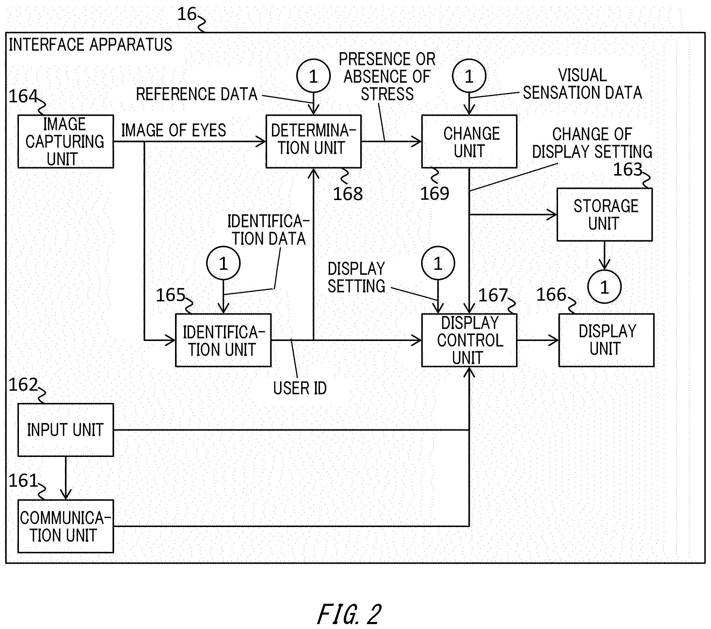

Fig. 2 illustrates the interface apparatus 16. The interface apparatus 16 has a communication unit 161, an input unit 162, a storage unit 163, an image capturing unit 164, an identification unit 165, a display unit 166, a display control unit 167, a determination unit 168, and a change unit 169.

### [2-1. Communication unit 161]

The communication unit 161 is configured to communicate with the operation control apparatus 15, the resource management apparatus 17, or the like in a wireless manner. The communication unit 161 may supply the received data (as one example, the process value or the set parameter value) to the display control unit 167, and cause the data to be displayed on the display unit 166.

### [2-2. Input unit 162]

The input unit 162 is configured to receive an input from a user. For example, the target value of the process value or the like may be input to the input unit 162. The input unit 162 may supply the input contents to the display control unit 167 and cause the contents to be displayed on the display unit 166. In addition, the input unit 162 may supply the input contents to the communication unit 161, and cause the contents to be transmitted to the operation control apparatus 15 or the resource management apparatus 17.

### [2-3. Storage unit 163]

The storage unit 163 is configured to store user data for each of a plurality of users. For example, the storage unit 163 may store user data in association with identification information of each user (which will be also referred to as a user ID). The user data may include a display setting, visual sensation data, identification data, and reference data.

### [2. 3(1). Display setting]

The display setting is data indicating setting contents of a display environment in the display unit 166, and according to the present embodiment, as one example, may indicate at least one of a size of a letter or a luminance of the display screen.

### [2. 3(2). Visual sensation data]

The visual sensation data is data related to a visual sensation function with respect to the display screen, and according to the present embodiment, as one example, may indicate at least one of an age or an eyesight of the user.

### [2. 3(3). Identification data]

The identification data is data for identifying the user currently facing the display screen of the display unit 166 (which will be also referred to as a current user). For example, the identification data may indicate an iris pattern of the eyes of the user. The identification data may also be used to authenticate a user who uses the interface apparatus 16.

### [2. 3(4). Reference data]

The reference data indicates a reference used as a determination reference in the determination by the determination unit 168. According to the present embodiment, as one example, the reference data may indicate a reference width in an up-down direction of eyes of the user. The reference width may be set based on the width in an up-down direction of the eyes in a case where the user does not feel stress with respect to the display of the display screen. As one example, the reference width may be a value obtained by subtracting a margin from a minimum value that the width in the up-down direction of the eyes may take in a case where the user does not feel stress.

### [2. 4. Image capturing unit 164]

The image capturing unit 164 is configured to capture the eyes of the user. The image capturing unit 164 may supply an image of the captured eyes to the identification unit 165 and the determination unit 168. Note that according to the present embodiment, as one example, the image capturing unit 164 is provided in an outer circumference section of the display screen of the display unit 166, but may be provided in other locations.

### [2. 5. Identification unit 165]

The identification unit 165 is configured to identify the current user currently facing the display screen among a plurality of users. The identification unit 165 may identify the current user using an iris pattern of the eyes captured by the image capturing unit 164. According to the present embodiment, as one example, the current user may be identified by collating the iris pattern captured in the image against the iris pattern of the identification data of each user which is stored in the storage unit 163. The identification unit 165 may supply the user ID of the identified current user to the determination unit 168 and the display control unit 167.

### [2. 6. Display unit 166]

The display unit 166 includes one or a plurality of display screens. The display unit 166 may display various types of data in the plant which are supplied via the display control unit 167 (as one example, the process value and the set parameter value). A display state of the display screen (as one example, a state related to the size of the letter or the luminance of the display screen) may be controlled by the display control unit 167.

### [2. 7. Display control unit 167]

The display control unit 167 is configured to cause the display screen to perform display by the display setting corresponding to the current user identified by the identification unit 165 (according to the present embodiment, as one example, the setting related to at least one of the size of the letter or the luminance of the display screen). The display control unit 167 may read out the display setting associated with the user ID of the current user which is supplied from the identification unit 165 in the storage unit 163, and perform a display control based on the display setting.

### [2. 8. Determination unit 168]

The determination unit 168 is configured to determine the presence or absence of the stress of the user with respect to the display. The determination unit 168 may determine the presence or absence of the stress based on the state of the eyes captured by the image capturing unit 164. For example, the determination unit 168 may determine that the stress is present in response to a state where the captured eyes are squinched to be thinner than the reference width. The reference width may be set for each user, and according to the present embodiment, as one example, may be the width indicated by the reference data stored in the storage unit 163 in association with the user ID of the current user. The determination unit 168 may supply a determination result to the change unit 169.

### [2. 9. Change unit 169]

When the determination unit 168 determines that the stress is present, the change unit 169 is configured to change the display setting corresponding to the current user. The change unit 169 may change at least one of the size of the letter to be displayed or the luminance of the display screen.

The change unit 169 may change the display setting according to visual sensation data of the current user which is stored in the storage unit 163 (according to the present embodiment, as one example, at least one of the age or the eyesight of the user). For example, the change unit 169 may perform at least one of a change to increase the size of the letter to be displayed or a change to brighten the display screen as the age indicated by the visual sensation data is higher. In addition to or instead of this, the change unit 169 may perform at least one of the change to increase the size of the letter to be displayed or the change to brighten the display screen as the eyesight indicated by the visual sensation data is lower.

In accordance with the interface apparatus 16 described above, the display is performed on the display screen by the display setting corresponding to the current user, and when it is determined that the stress of the user with respect to the display is present, the display setting corresponding to the current user is changed. Therefore, it is possible to change the display setting to reduce the stress for each user.

In addition, since the display setting is changed in accordance with the visual sensation data related to the visual sensation function of the current user, the display setting can be changed such that the stress of the current user is reliably reduced.

In addition, since the visual sensation data indicates at least one of the age or the eyesight of the user, the display setting can be appropriately changed in accordance with the age or the eyesight.

In addition, since at least one of the size of the letter to be displayed or the luminance of the display screen is changed, it is possible to change the display setting such that the stress is reliably reduced.

In addition, since the presence or absence of the stress is determined based on the state of the captured eyes, the presence or absence of the stress with respect to the display can be accurately determined.

Since it is determined that the stress is present in accordance with a state where the captured eyes are squinched to be thinner than the reference width, it is possible to accurately determine the presence or absence of the stress.

In addition, since the current user is identified by iris recognition of the captured eyes, the current user can be accurately identified.

### [3. Operation of interface apparatus 16]

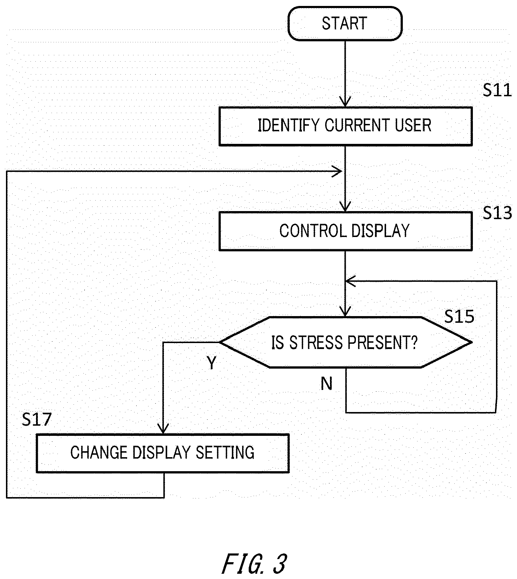

Fig. 3 illustrates an operation of the interface apparatus 16. The interface apparatus 16 is configured to reduce the stress with respect to the display by performing processing in steps S11 to S17. Note that this operation may start in accordance with the activation of the interface apparatus 16, or may start when the user performs a login operation onto the interface apparatus 16. In addition, in this operation, the display setting may be stored in the storage unit 163 for each of a plurality of users.

In step S11, the identification unit 165 identifies the current user currently facing the display screen among the plurality of users. The identification unit 165 may identify the current user by the iris recognition of the eyes captured by the image capturing unit 164. Note that the image capturing unit 164 may perform the image capturing in accordance with timing at which the processing in step S11 is performed or may continuously perform the image capturing.

In step S13, the display control unit 167 causes the display screen of the display unit 166 to perform the display by the display setting corresponding to the current user (according to the present embodiment, as one example, the setting related to at least one of the size of the letter or the luminance of the display screen).

In step S15, the determination unit 168 determines the presence or absence of the stress of the user with respect to the display. The determination unit 168 may determine the presence or absence of the stress based on the state of the eyes captured by the image capturing unit 164. When it is determined that the stress is absent (step S15; N), the processing may shift to step S15. When it is determined that the stress is present (step S15; Y), the processing may shift to step S17. Note that the image capturing unit 164 may perform the image capturing in accordance with timing at which the processing in step S15 is performed or may continuously perform the image capturing.

In step S17, the change unit 169 changes the display setting corresponding to the current user (according to the present embodiment, as one example, the setting related to at least one of the size of the letter or the luminance of the display screen). According to the present embodiment, as one example, the change unit 169 may change the display setting of the storage unit 163 corresponding to the current user. When step S17 ends, the processing may shift to step S13.

Note that in the processing in step S17, the change unit 169 may perform the change of the display state of the display screen by the display control unit 167 instead of the change of the display setting in the storage unit 163 or in addition to this. In this case, when the processing in step S17 ends, the processing may shift to step S15.

### [4. Modified example]

According to the above-mentioned embodiment, the configuration has been described where the interface apparatus 16 has the communication unit 161, the input unit 162, the image capturing unit 164, and the like, but it is also sufficient when the interface apparatus 16 does not have any one of these. For example, when the interface apparatus 16 does not have the communication unit 161 or the input unit 162, the display unit 166 may display the contents stored in the storage unit 163. On the other hand, when the interface apparatus 16 does not have the image capturing unit 164, the determination unit 168 may determine the presence or absence of the stress based on biological information such as a heart rate, a breathing rate, a width of a blood vessel, or a blood glucose level of the current user.

In addition, the configuration has been described where the identification unit 165 identifies the current user using the iris pattern of the eyes captured by the image capturing unit 164, but the current user may be identified by other techniques. For example, the identification unit 165 may identify the current user based on authentication information input from the user via the input unit 162. In this case, the storage unit 163 may store the authentication information including the user ID and a password as the identification data for each user. In addition, the identification unit 165 may identify the current user by facial authentication of the user captured by the image capturing unit 164. In this case, the storage unit 163 may store feature data indicating a feature of a face as the identification data for each user (as one example, relative locations and sizes of the eyes, nose, and mouth).

In addition, the configuration has been described where the visual sensation data for each user indicates at least one of the age or the eyesight of the user, but the visual sensation data may indicate other contents. For example, in a case where a plurality of seats are arranged in front of the display screen, and different seat locations are allocated for the respective users, the visual sensation data may indicate a location of the seat allocated to the user among the plurality of these seats. In this case, when the determination unit 168 determines that the stress is present, the change unit 169 may perform at least one of the change to increase the size of the letter to be displayed or the change to brighten the display screen as the seat location indicated by the visual sensation data is farther from the display screen. Thus, the display setting can be appropriately changed in accordance with the seat location of the current user.

In addition, the apparatus according to the present embodiment has been described as the interface apparatus 16, but may be the resource management apparatus 17 or the terminal device 12 for maintenance. In addition, as long as the display is performed for the user, the apparatus may be any of other apparatuses, and may be a head mount display as one example.

Various embodiments of the present invention may be described with reference to flowcharts and block diagrams whose blocks may represent (1) steps of processes in which operations are performed or (2) sections of devices responsible for performing operations. Certain steps and sections may be implemented by a dedicated circuit, programmable circuitry supplied with computer readable instructions stored on computer readable media, and/or processors supplied with computer readable instructions stored on computer readable media. A dedicated circuit may include digital and/or analog hardware circuits and may include integrated circuits (IC) and/or discrete circuits. Programmable circuitry may include reconfigurable hardware circuits including logical AND, OR, XOR, NAND, NOR, and other logical operations, flip-flops, registers, memory elements, etc., such as field-programmable gate arrays (FPGA), programmable logic arrays (PLA), etc.

Computer readable media may include any tangible device that can store instructions for execution by a suitable device, such that the computer readable medium having instructions stored therein comprises an article of manufacture including instructions which can be executed to create means for performing operations specified in the flowcharts or block diagrams. Examples of computer readable media may include an electronic storage medium, a magnetic storage medium, an optical storage medium, an electromagnetic storage medium, a semiconductor storage medium, etc. More specific examples of computer readable media may include a floppy (registered trademark) disk, a diskette, a hard disk, a random access memory (RAM), a read only memory (ROM), an erasable programmable read only memory (EPROM or Flash memory), an electrically erasable programmable read only memory (EEPROM), a static random access memory (SRAM), a compact disc read only memory (CD-ROM), a digital versatile disk (DVD), a BLU-RAY (registered trademark) disc, a memory stick, an integrated circuit card, etc.

Computer readable instructions may include assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk (registered trademark), JAVA (registered trademark), C++, etc., and conventional procedural programming languages, such as the "C" programming language or similar programming languages.

Computer readable instructions may be provided to a processor of a general purpose computer, special purpose computer, or other programmable data processing device, or to programmable circuitry, locally or via a local area network (LAN), wide area network (WAN) such as the Internet, etc., to execute the computer readable instructions to create means for performing operations specified in the flowcharts or block diagrams. Examples of processors include computer processors, processing units, microprocessors, digital signal processors, controllers, microcontrollers, etc.

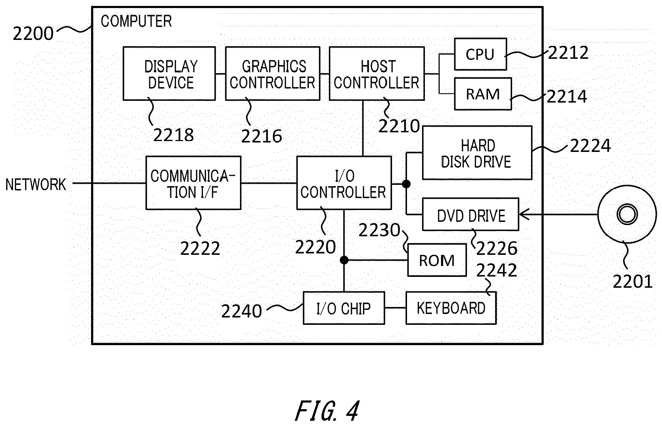

Fig. 4 illustrates an example of a computer 2200 through which a plurality of aspects of the present invention may be entirely or partially embodied. A program that is installed in the computer 2200 can cause the computer 2200 to function as or perform operations associated with apparatuses of the embodiments of the present invention or one or more sections thereof, or perform the operations or the one or more sections, and/or cause the computer 2200 to perform processes of the embodiments of the present invention or steps of the processes. Such a program may be executed by the CPU 2212 to cause the computer 2200 to perform certain operations associated with some or all of the blocks of flowcharts and block diagrams described herein.

The computer 2200 according to the present embodiment includes a CPU 2212, a RAM 2214, a graphics controller 2216, and a display device 2218, which are mutually connected by a host controller 2210. The computer 2200 also includes input/output units such as a communication interface 2222, a hard disk drive 2224, a DVD-ROM drive 2226 and an IC card drive, which are connected to the host controller 2210 via an input/output controller 2220. The computer also includes legacy input/output units such as a ROM 2230 and a keyboard 2242, which are connected to the input/output controller 2220 through an input/output chip 2240.

The CPU 2212 operates according to programs stored in the ROM 2230 and the RAM 2214, thereby controlling each unit. The graphics controller 2216 obtains image data generated by the CPU 2212 on a frame buffer or the like provided in the RAM 2214 or in itself, and causes the image data to be displayed on the display device 2218.

The communication interface 2222 communicates with other electronic devices via a network. The hard disk drive 2224 stores programs and data used by the CPU 2212 within the computer 2200. The DVD-ROM drive 2226 reads the programs or the data from the DVD-ROM 2201, and provides the hard disk drive 2224 with the programs or the data via the RAM 2214. The IC card drive reads programs and data from an IC card, and/or writes programs and data into the IC card.

The ROM 2230 stores therein a boot program or the like executed by the computer 2200 at the time of activation, and/or a program depending on the hardware of the computer 2200. The input/output chip 2240 may also connect various input/output units via a parallel port, a serial port, a keyboard port, a mouse port, or the like to the input/output controller 2220.

A program is provided by computer readable media such as the DVD-ROM 2201 or the IC card. The program is read from the computer readable media, installed into the hard disk drive 2224, RAM 2214, or ROM 2230, which are also examples of computer readable media, and executed by the CPU 2212. The information processing described in these programs is read into the computer 2200, resulting in cooperation between a program and the above-mentioned various types of hardware resources. An apparatus or method may be constituted by realizing the operation or processing of information in accordance with the usage of the computer 2200.

For example, when communication is performed between the computer 2200 and an external device, the CPU 2212 may execute a communication program loaded onto the RAM 2214 to instruct communication processing to the communication interface 2222, based on the processing described in the communication program. The communication interface 2222, under control of the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording medium.

In addition, the CPU 2212 may cause all or a necessary portion of a file or a database to be read into the RAM 2214, the file or the database having been stored in an external recording medium such as the hard disk drive 2224, the DVD-ROM drive 2226 (DVD-ROM 2201), the IC card, etc., and perform various types of processing on the data on the RAM 2214. The CPU 2212 may then write back the processed data to the external recording medium.

Various types of information, such as various types of programs, data, tables, and databases, may be stored in the recording medium to undergo information processing. The CPU 2212 may perform various types of processing on the data read from the RAM 2214, which includes various types of operations, processing of information, condition judging, conditional branch, unconditional branch, search/replace of information, etc., as described throughout this disclosure and designated by an instruction sequence of programs, and writes the result back to the RAM 2214. In addition, the CPU 2212 may search for information in a file, a database, etc., in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The above-explained program or software modules may be stored in the computer readable media on the computer 2200 or near the computer 2200. In addition, a recording medium such as a hard disk or a RAM provided in a server system connected to a dedicated communication network or the Internet can be used as the computer readable media, thereby providing the program to the computer 2200 via the network.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

- 1:: maintenance and management system
- 11:: device
- 12:: terminal device for maintenance
- 15:: operation control apparatus
- 16:: interface apparatus
- 17:: resource management apparatus
- 100:: control network
- 161:: communication unit
- 162:: input unit
- 163:: storage unit
- 164:: image capturing unit
- 165:: identification unit
- 166:: display unit
- 167:: display control unit
- 168:: determination unit
- 169:: change unit
- 2200:: computer
- 2201:: DVD-ROM
- 2210:: host controller
- 2212:: CPU
- 2214:: RAM
- 2216:: graphics controller
- 2218:: display device
- 2220:: input/output controller
- 2222:: communication interface
- 2224:: hard disk drive
- 2226:: DVD-ROM drive
- 2230:: ROM
- 2240:: input/output chip
- 2242:: keyboard

## Claims

1. An apparatus comprising:
a storage unit configured to store a display setting for each of a plurality of users;
an identification unit configured to identify a current user currently facing a display screen among the plurality of users;
a display control unit configured to cause the display screen to perform display by the display setting corresponding to the current user;
a determination unit configured to determine presence or absence of stress of the user with respect to the display; and
a change unit configured to change the display setting corresponding to the current user when it is determined that the stress is present.

2. The apparatus according to claim 1, wherein:
the storage unit is further configured to store visual sensation data related to a visual sensation function with respect to the display screen for each of the users; and
the change unit is configured to change the display setting in accordance with the visual sensation data of the current user.

3. The apparatus according to claim 2, wherein the visual sensation data indicates at least one of an age or an eyesight of the user.

4. The apparatus according to claim 2, wherein the visual sensation data indicates a location of a seat allocated to the user among a plurality of seats.

5. The apparatus according to any one of claims 1 to 4, wherein the change unit is configured to change a size of a letter to be displayed.

6. The apparatus according to any one of claims 1 to 5, wherein the change unit is configured to change a luminance of the display screen.

7. The apparatus according to any one of claims 1 to 6, further comprising:
an image capturing unit configured to capture eyes of the user, wherein
the identification unit is configured to identify the current user using an iris pattern of the eyes captured by the image capturing unit.

8. The apparatus according to any one of claims 1 to 6, further comprising:
an input unit configured to receive an input of authentication information from the user, wherein
the identification unit is configured to identify the current user based on the authentication information.

9. The apparatus according to any one of claims 1 to 8, further comprising:
an image capturing unit configured to capture eyes of the user, wherein
the determination unit is configured to determine presence or absence of stress based on a state of the eyes captured by the image capturing unit.

10. The apparatus according to claim 9, wherein the determination unit is configured to determine that the stress is present in response to a state where the captured eyes are squinched to be thinner than a reference width.

11. A method comprising:
storing a display setting for each of a plurality of users;
identifying a current user currently facing a display screen among the plurality of users;
causing the display screen to perform display by the display setting corresponding to the current user;
determining presence or absence of stress of the user with respect to the display; and
changing the display setting corresponding to the current user when it is determined that the stress is present.

12. A program that causes a computer to function as:
a storage unit configured to store a display setting for each of a plurality of users;
an identification unit configured to identify a current user currently facing a display screen among the plurality of users;
a display control unit configured to cause the display screen to perform display by the display setting corresponding to the current user;
a determination unit configured to determine presence or absence of stress of the user with respect to the display; and
a change unit configured to change the display setting corresponding to the current user when it is determined that the stress is present.
